# EUROPEAN PATENT SPECIFICATION

(11) **EP 2 322 315 B1**
(45) Date of publication and mention of the grant of the patent: **03.09.2014**
(21) Application number: 10014410.4
(22) Date of filing: 09.11.2010
(51) Int. Cl.: B23K 35/02, B23K 35/30, B23K 35/362, B23K 35/368, B23K 35/38, B23K 35/40, B23K 9/04

(54) **Hardfacing mig-arc welding wire and hardfacing mig-arc welding process**
MIG-Aufschweißdraht und MIG-Aufschweißverfahren
Surfaçage de fil de soudage à l'arc MIG et procédé de soudage à l'arc MIG avec surfaçage

(30) Priority: 17.11.2009 JP 2009262200
(43) Date of publication of application: 18.05.2011
(73) Proprietor: Kabushiki Kaisha Kobe Seiko Sho, Hyogo 651-8585 (JP)
(72) Inventor: Suzuki, Reiichi, Fujisawa-shi Kanagawa 251-0014 (JP)
(74) Representative: Müller-Boré & Partner Patentanwälte PartG mbB

(56) References cited:
- AU-B1- 709 342
- JP-A- 2 241 693
- JP-A- 9 239 587
- JP-A- 11 197 877
- US-A- 5 210 388
- US-B1- 6 303 891

## Description

The present invention relates generally to a wire and a process both adopted to hardfacing MIG-arc welding where excellent wear resistance is required.

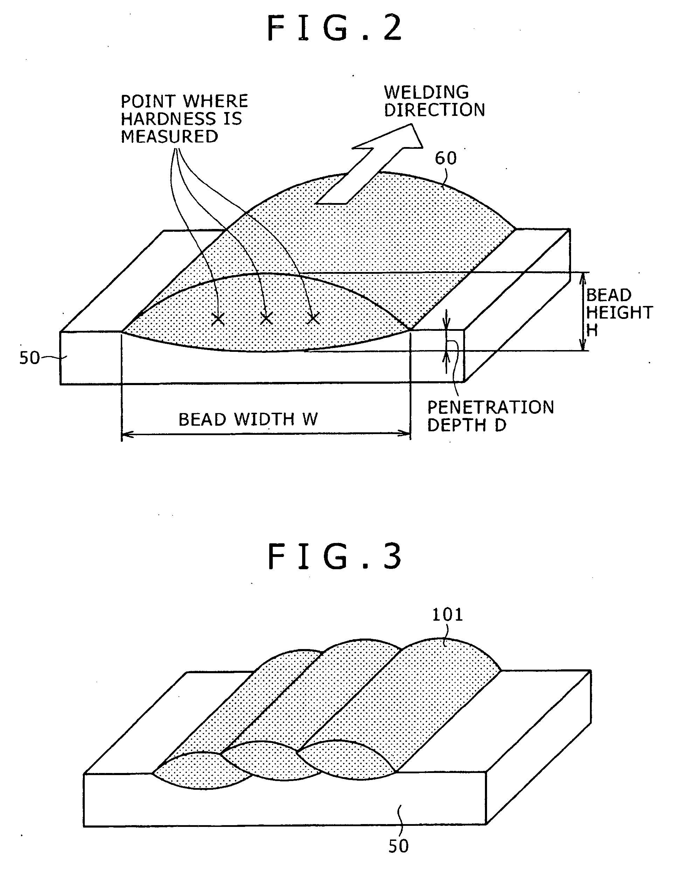

In general, hardfacing welding is applied to a portion of a base metal where wear due to the contact with earth/sand or with another metal should be avoided. Fig. 3 is a schematic view of a portion where hardfacing welding has been applied. As is illustrated in Fig. 3, the hardfacing welding gives a hardfacing weld metal 101 on the surface of a base metal 50. Exemplary metal microstructures of materials for the hardfacing weld metal 101 include martensite, and austenite containing a large amount of chromium (Cr) . Most of such materials contain larger amounts of carbon than those in regular carbon steels, because carbon has a high activity to increase the hardness of the weld metal. Typically, Japanese Patent No. 3548414 discloses a flux-cored wire for hardfacing welding, which contains a predetermined amount of carbon.

Such common hardfacing welding techniques, however, have the following problems.

Exemplary processes adopted to hardfacing welding include shielded metal-arc welding, gas-shielded arc welding, submerged arc welding, electroslag welding, and various other arc welding processes. Among them, the gas-shielded arc welding process, when using a welding wire with a high carbon content, inevitably suffers from the generation of fumes and/or spatters in large amounts because carbon and oxygen combine and react with each other to cause vaporization explosion upon the formation of molten droplets. Accordingly, the working environment in a working area of hardfacing welding is hostile and should be improved.

To reduce spatters in any way, there has been practically used a flux-cored wire containing a large amount of titanium oxide which plays a role as an arc stabilizer. The use of such flux-cored wire, however, causes the generation of slag in a large amount to thereby cause slug inclusion defects or requires a slag removal operation.

Relating to the shape of the weldbead, if the beadpenetrates excessively deep, the hardfacing weld metal constituting the bead is affected by the components of the base metal and thereby shows instable quality. To avoid this and to provide stable metal performance, the hardfacing weld metal should penetrate the base metal shallower than customary hardfacing weld metals do.

In view of the external shape of the weld bead, bead, if having a convex shape, requires a processing after welding to flatten the bead surface. However, high hardness of the bead impedes the processing operation, and the hardfacing weld metal (weld bead) should have a more flat surface than those of conventional equivalents.

Customary flux-cored wires for hardfacing welding are specified typically in Japanese Industrial Standards (JIS) Z3326, in which CO₂ or a gaseous mixture containing argon (Ar) and 20 percent by volume or more of CO₂ is to be used as a shielding gas in combination with the wires. While not specified in Japanese Industrial Standards, some of hardfacing welding wires are solid wires of wire rod type, containing no flux. Such solid wires, however, have lower degrees of freedom in design of their components than those of flux-cored wires, suffer from problems in generation of fumes and spatters, penetration depths, and bead shapes as with the flux-cored wires, and should be used in combination with a shielding gas having the same composition as with the flux-cored wires. Thus, the solid wires are not so general as compared to the flux-cored wires.

JPH11197877 discloses a flux cored wire for hard build-up welding wherein the flux cored wire is one with flux packed inside the outer skin of an iron-based metal and the ratio of the components in the entire wire is designed to be as follows, by weight: 0.5<C≤1.5%, 0.6-2.1% Si, 0.6-1.8% Mn, 2.5-7.5% Cr, 0.1≤W<1.5%, 0.1≤V<1.5%, 1.0-8.0% Mo, and 0.2<B≤0.8%.

The present invention has been made under these circumstances, and an object of the present invention is to provide a hardfacing MIG-arc welding wire and a hardfacing MIG-arc welding process, both of which can give a hardfacing weld metal having a flat bead shape and showing an adequately small penetration depth, while suppressing the generation of fumes, spatters, and slag.

Specifically, the present invention provides, in an embodiment, a hardfacing MIG-arc welding wire (hereinafter also referred to as "welding wire" according to necessity) which is a wire adopted to hardfacing MIG-arc welding using a pure argon gas as a shielding gas, in which the wire is a flux-cored wire including a drawn steel hoop or steel pipe as a sheath; and a flux filled in the sheath, the flux contains, based on the total mass of the wire: carbon (C) in a content of 0.12 to 5.00 percent by mass; silicon (Si) in a content of 0.50 to 3.00 percent by mass; manganese (Mn) in a content of 0.30 to 20.00 percent by mass; phosphorus (P) in a content of 0.050 percent by mass or less; sulfur (S) in a content of 0.050 percent by mass or less; and at least one selected from the group consisting of TiO₂, ZrO₂, and Al₂O₃ (TiO₂+ZrO₂+Al₂O₃) in a total content of 0.10 to 1.20 percent by mass, the flux has a total content of silicon and manganese (Si+Mn) of 1.20 percent by mass or more based on the total mass of the wire, and the wire has a ratio of the total mass of the flux to the mass of the wire of 5 to 30 percent by mass.

The welding wire having such configuration, as being in the formof a flux-cored wire, does not undergo continuous melting in its cross section but is molten at suitable intervals, and the molten wire becomes spherical due to its surface tension and falls down as spherical molten droplets even in welding in a pure argon shielding gas environment where a pure argon gas is used as the shielding gas and the force to pinch off the molten droplets is small . The flux in the wire contains a predetermined amount of carbon, and this allows the wire to be resistant to the formation of an elongated molten droplet hanging at the tip of the wire and causes martensite transformation to thereby increase the hardness of the weld metal. The flux, as containing Si, Mn, P, and S in predetermined contents and having a specific total content of Si and Mn, helps the molten pool to have improved wettability with the base metal and to have increased hardenability, and thereby helps the weld metal to have an increased hardness and increased corrosion resistance. The flux has a specific total content of TiO₂, ZrO₂, and Al₂O₃, whereby the flux exposed from the tip of the wire always generates arcs. In addition, an endothermic reaction occurs during the thermal decomposition of TiO₂, ZrO₂, and Al₂O₃ and causes an arc near to the anode to have a smaller cross section. These actions impede the unstable phenomenon of creeping up of an arc generation spot along the wire. In addition, the wire has a specific ratio of the total mass of the flux to the mass of the wire, and this stabilizes the arc adequately in the pure argon shielding gas atmosphere and enables multistage melting where the melting occurs in the core portion of the wire later than that in the peripheral portion of the wire. In a preferred embodiment, the wire gives a weld metal having a Vickers hardness of 200 or more, whereby the weldmetal has satisfactory functions as a hardfacing weld metal.

In the welding wire according to the present invention, the f lux pref erably contains , as the carbon, graphite in a content of 0.10 percent by mass or more based on the total mass of the wire.

The wire having such configuration has an elevated melting point of the flux and thereby shows improved productivity, while allowing the arc to be stable more satisfactorily.

In a preferred embodiment of the welding wire according to the present invention, the flux preferably has a ratio of the total mass of TiO₂ ZrO₂ and Al₂O₃ to the mass of carbon [(TiO₂+ZrO₂+Al₂O₃)/C] of 5.0 or less.

The wire having such configuration less causes CO explosion in a portion of a molten droplet hanging at the tip of the wire (hereinafter also referred as "tip-hanging molten droplet portion" according to necessity), thus suppressing the generation of spatters and fumes.

In another preferred embodiment of the welding wire according to the present invention, the flux further contains, based on the total mass of the wire, one or more selected from the group consisting of chromium (Cr) in a content of 30.0 percent by mass or less, molybdenum (Mo) in a content of 2.0 percent by mass or less, nickel (Ni) in a content of 3.0 percent by mass or less, boron (B) in a content of 1.0 percent by mass or less, vanadium (V) in a content of 3.0 percent by mass or less, and tungsten (W) in a content of 3.0 percent by mass or less.

The wire, as containing these components, shows higher hardenability to give a weld metal having higher hardness.

The hardfacing MIG-arc welding process according to the present invention (hereinafter also referred as "arc welding process" according to necessity) is a process adopted to hardfacing MIG-arc welding using the above-mentioned hardfacing MIG-arc welding wire while using a pure argon gas as a shielding gas.

The welding process employs the combination of the welding wire according to the present invention with a pure argon gas, a nonoxidative inert gas, as the shielding gas, whereby less causes the generation of fumes, spatters, and slag, and can give a weld metal (weld bead) having a flat shape and showing an adequately small penetration depth. In a preferred embodiment, the process gives a weld metal having a Vickers hardness of 200 or more, whereby the weld metal shows satisfactory functions as a hardfacing weld metal.

The arc welding process according to the present invention preferably adopts a pulse waveform as a current waveform, and the pulse waveform more preferably has a peak current of 400 to 450 amperes (A).

The weldingprocess having such configuration adopts apulse waveform as the current waveform, can thereby always utilize an action at a high pulse peak current region regardless of an average current to impart pinch force to thereby enable regular pinch-off of molten droplets. This suppresses the generation of spatters and fumes at currents ranging from low currents to high currents. The pulse waveform, by having a peak current of 400 A or more, helps the arc to be more stabilized to thereby impede the generation of spatters and fumes; and the pulse waveform, by having a peak current of 450 A or less, allows the arc to have unexcessive directivity, and this prevents the molten metal from penetrating excessively deep.

The hardfacing MIG-arc welding wire according to the present invention realizes significantly reduced fume generation rate, spatter generation rate, and slag generation rate, as compared to customary equivalents. The wire gives a bead having a flat shape and showing an adequately small penetration depth. In addition, the wire can give a weldmetal (bead) showing no internal defects and having a sufficient hardness as a hardfacing weld metal.

The hardfacing MIG-arc welding process according to the present invention adopts the combination of the wire having a specific composition with the shielding gas having a specific composition, and preferably further with a specific welding current waveform and can thereby significantly reduce the generation rates of fumes, spatters, and slag, as compared to customary equivalents. The process gives a weld bead having a flat shape and showing an adequately small penetration depth. In addition, the process gives a weld metal (weld bead) showing no internal defects and having a sufficient hardness.

These advantages can improve the working environment of hardfacing welding which is considered to be most hostile among all the types of welding industry. The process avoids the use of CO₂ gas, a greenhouse-gas, and thereby eliminates the need of consuming CO₂ gas, leading to improvements in global environment in future.

Figs. 1A, 1B, and 1C are schematic views of cross-sectional shapes of weld beads, explaining the transfer of molten droplets in a pure argon shielding gas environment;

Fig. 2 is a schematic view explaining evaluation methods in experimental examples; and

Fig. 3 is a schematic view showing a portion where hardfacing welding has been applied.

Some embodiments of the present invention will be illustrated in detail below.

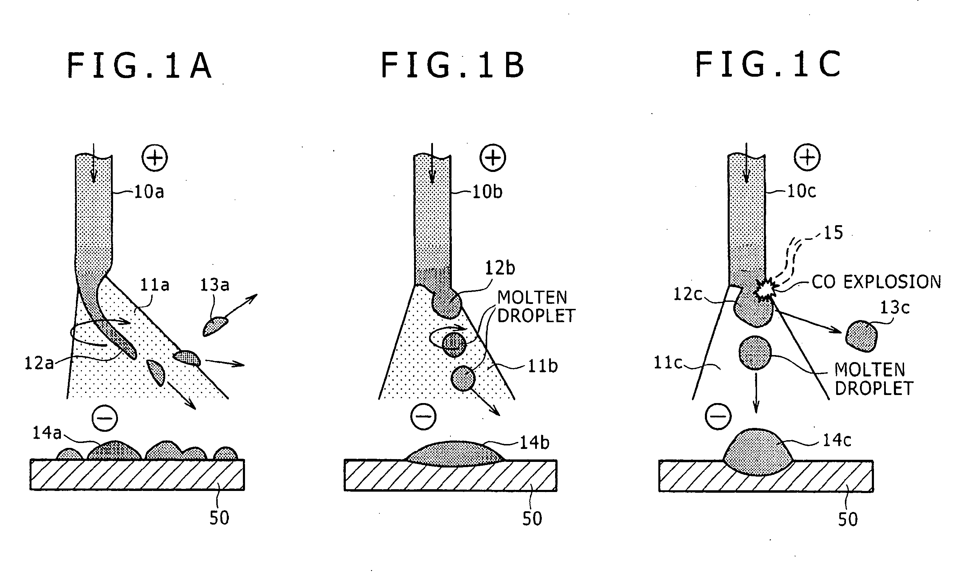

Initially with reference to Figs. 1A, 1B, and 1C, the fundamentals of the hardfacing MIG-arc welding wire according to the present invention (hereinafter also appropriately referred as "welding wire") and the hardfacing MIG-arc welding process according to the present invention (hereinafter also appropriately referred as "arc welding process") made by the present inventors will be described.

Figs. 1A, 1B, and 1C are schematic views of cross-sectional shapes of weld beads, explaining the transfer of the molten droplet in a pure argon shielding gas environment. Fig. 1A illustrates arc welding with a pure argon gas, using a customary solid wire or flux-cored wire having a total content of TiO₂ ZrO₂, and Al₂O₃ of less than 0.10 percent by mass or one having a total content of TiO₂ ZrO₂, and Al₂O₃ of 0.10 to 1.20 percent by mass but a carbon content of less than 0.12 percent by mass.

Fig. 1B illustrates arc welding with a pure argon gas, using a flux-cored wire according to the present invention having a total content of TiO₂, ZrO₂, and Al₂O₃ of 0.10 to 1.20 percent by mass and a carbon content of 0.12 to 5.00 percent by mass.

Fig. 1C illustrates arc welding with a pure argon gas, using a customary flux-cored wire having a total content of TiO₂, ZrO₂, and Al₂O₃ of more than 1.20 percent by mass or one having a total content of TiO₂, ZrO₂ and Al₂O₃ of 0.10 to 1.20 percent by mass but a carbon content of more than 5.00 percent by mass.

Increase in carbon content is effective to harden the weld metal in consideration of its effectiveness and cost. However, such high carbon content causes the generation of fumes and spatters in large amounts, as described above. The generation of fumes and spatters in large amounts is caused by a significant oxidation reaction during the formation of molten droplets and can be improved or suppressed in theory by reducing contents of oxidative components, such as oxygen and carbon dioxide, in the shielding gas. However, the use of a shielding gas having no oxidative property, i.e., the use of a shielding gas containing an inert gas, such as argon gas, alone, significantly impairs the arc stability, and this impedes normal welding and causes, for example, meandering beads. Accordingly, it has been believed that there is a lower limit of several percent by volume in the content of oxidative components even when the shielding gas composition is designed to have a lower oxygen content.

However, after intensive investigations, the present inventors have found that the mass dif fusion in the molten droplet limits the oxidation reaction rate in the molten droplet. Specifically, the present inventors have found that the generation of fumes and spatters cannot be significantly reduced if the shielding gas contains oxidative components even in an amount of several percent by volume, because the feeding rate of the gas component does not limit the oxidation reaction rate, whereby the quantity of the reaction between the oxidative component and substances in the molten droplet surface does not vary so much, regardless of the content (percent by volume) of the oxidative component. Based on these findings, the present inventors have considered that use of a pure argon gas is most effective to reduce the generation of fumes and spatters significantly in a composition having a high carbon content.

The present inventors have made further investigations on why the arc becomes unstable when a pure argon gas is adopted to a customary welding wire and have found that the arc becomes unstable for the following reasons.

When the shielding gas contains CO₂ and/or O₂, these components undergo thermal dissociation in the vicinity of an arc 11a to induce an endothermic reaction. However, as is illustrated in Fig. 1A, when a pure argon gas is used as the shielding gas in welding using a welding wire 10a, the endothermic reaction is not induced, whereby a so-called thermal pinch force, force of shrinking to increase its density, is not generated. Accordingly the molten droplet is not pinched-off, elongates, and hangs at the tip of the wire to form an elongated tip-hanging molten droplet 12a, and that the elongated molten droplet is largely affected by magnetic arc blow and/or by transfer of the cathode spot in the vicinity of the molten pool. This causes problems such as the generation of a spatter 13a in a large amount, an inferior shape of the bead, and an insufficient penetration of the bead (see a hardfacing weld metal 14a).

As the shape of the elongated molten droplet hanging at the tip of the wire, i.e., the elongated tip-hanging molten droplet 12a becomes the prime issue on the adaptation of the pure argon gas, there is needed a way to allow the molten droplet to have not an elongated shape but a spherical shape to generate a stable arc (see a tip-hanging molten droplet 12b in Fig. 1B) . As possible candidates as the way to achieve this, the present inventors have investigated on (1) feed of oxygen from another substance than the gas, so as to obtain a minimum pinch force necessary for the pinch off of the hanging molten droplet; (2) addition of a substance that accelerates the generation rate of the arc to prevent creeping up of the arc to thereby allow the thermal pinch force to act effectively; and (3) providing of a shape and/or properties of the wire so as to prevent melting in portions ranging from the periphery to the core of the wire at a substantially uniform rate, i.e., to realize a multi-stage melting in which melting occurs later in the core portion than in the periphery of the wire.

After investigations on these specific ways, the present inventors have found that necessary conditions are that (i) oxygen is supplied from the wire itself, namely, the wire plays a role as an oxygen source; (ii) Ti, Zr, and Al compounds are added in adequate amounts; (iii) the wire is a flux-cored wire having a cross-sectional structure including a sheath and a flux filled in the sheath; and (iv) carbon is added to retard the melting of the flux. In addition, the present inventors have found that the use of at least one of TiO₂, ZrO₂ and Al₂O₃ is optimal to provide the conditions (i) and (ii). As illustrated in Fig. 1B, a process using the welding wire 10b, where contents of the above components and other parameters are adequately controlled, can provide novel properties different from those obtained by customary welding processes. Specifically, the process using the welding wire 10b not only enables significant reduction in fumes and spatters but also allows the arc 11b to maintain adequate instability, to give a weld bead having a wide and flat shape and showing a thin penetration shape (see the hardfacing weld metal 14b).

However, the present inventors have further found that, as illustrated in Fig. 1C, if an arc 11c is excessively stabilized by using a welding wire 10, an excessive oxidation reaction occurs, and this causes frequent CO explosions in a molten droplet portion 12c hanging at the tip of the wire to thereby increase the generation of a fume 15 and a spatter 13c and to increase the generation of slag (not shown). They also found that the arc converges excessively to form a weld bead having a narrow convex shape and/or showing a deep penetration shape (see a hardfacing weld metal 14c). Thus, the welding wire loses its advantageous effects.

Specifically, the present inventors have found that strict control of the total content of TiO₂, ZrO₂, and Al₂O₃ and the carbon content, and the balance between these contents enables welding which draws on excellent advantages of a pure argon gas, resulting in improvements in various welding properties of hardfacing welding.

The hardfacing MIG-arc welding wire and the hardfacing MIG-arc welding process according to the present invention will be illustrated below.

### «Hardfacing MIG-Arc Welding Wire»

The welding wire according to the present invention is adopted to welding using a pure argon gas as the shielding gas and is a flux-cored wire prepared by drawing a steel hoop or steel pipe as a sheath in which a flux is filled. Thefluxcontains, based on the total mass of the wire, C, Si, Mn, P, S, at least one of TiO₂ ZrO₂, and Al₂O₃ (TiO₂+ZrO₂+Al₂O₃) in specific contents and has a specific total content of silicon and manganese. In addition, the wire has a specific ratio of the total mass of the flux to the mass of the wire. In a preferred embodiment, the welding wire according to the present invention gives a weld metal having a Vickers hardness of 200 or more, as a result of welding.

The respective configurations will be illustrated below.

### <Wire Structure>

The welding wire is a flux-cored wire prepared by drawing a steel hoop or steel pipe as the sheath in which a flux is filled.

The pinch force on the molten droplet is low in a pure argon shielding gas environment. Under this condition, for allowing a molten droplet hanging at the tip of the wire to be spherical and to drop down, the wire should be prevented from continuously melting in its cross section to thereby allow the surface tension of the molten droplet itself to act effectively. As the way to achieve this industrially, the wire should be in the form of a flux-cored wire having a cross-sectional structure of a sheath and a flux filled in the sheath. A solid wire which melts uniformly does not undergo such discontinuous (nonuniform) melting. Such a flux-cored wire can be produced, for example, by a process of spreading a flux in a longitudinal direction of a steel hoop, forming the steel hoop into a round cross section so as to envelop the flux, and drawing the resulting article; or a process of filling a thick steel pipe with a flux and drawing the resulting article. Any production process will do, because the way to produce the wire does not affect the advantageous effects of the present invention. Wires produced by the former process include those having an open seam and those having a welded and closed seam. Any structure of the seam will also do in the present invention. Though there is no need of specifying the composition of the sheath, necessary amounts of alloy components as the entire wire depend on the required hardness of the weld metal, and a sheath composed of stainless steel SUS 430 steel can be used in the case of a mild steel or a steel having a large content of chromium alloys. The wire may be clad with a copper coat (plating) or not, because such plating does not affect the cross-sectional melting characteristics of the wire.

### <Carbon (C) content: 0.12 to 5.00 percent by mass>

Carbon (C) element causes transformation to martensite and is very effective as a hardfacing welding material. According to Japanese Industrial Standards, some of weld metals are specified as hardfacing weld metals even if they have a Vickers hardness of less than 200. In general, however, weld metals to be calledhardfacing weldmetals should have a Vickers hardness of at least 200 or more, and, to provide such high Vickers hardness, the wire preferably has a high carbon content. In contrast, the flux, if having an excessively high carbon content, may have an elevated melting point, and the wire is difficult to form an elongated tip-hanging molten droplet. From the viewpoints of providing both satisfactory hardness of the weld metal and high arc stability in a pure argon gas atmosphere, the carbon content should be at least 0.12 percent by mass or more, and preferably 0.20 percent by mass or more. In contrast, although the hardness of the weldmetal increases with an increasing carbon content, the flux, if having an carbon content exceeding 5.00 percent by mass, can drop without being molten into the weld metal to cause defects, and the tip-hanging molten droplet portion of the wire often suffers from CO explosions to fail to suppress the generation of fumes and spatters. Accordingly, the carbon content should be 5.00 percent by mass or less. The carbon content is desirably controlled to be 2.00 percent by mass or less from the viewpoint of further suppressing fumes and spatters.

### <Silicon (Si) content: 0.50 to 3.00 percent by mass>

Silicon (Si) helps to improve the wettability between the molten pool and the base metal to thereby allow the bead to have a flat shape. To exhibit this action effectively, the Si content should be at least 0.50 percent by mass or more. In contrast, silicon combines with oxygen contained in the wire to generate glassy SiO₂ slag. The flux, if having a Si content exceeding 3.00 percent by mass, may cause excessive slag generation and may significantly impair the slag removability, and this increases the load on the after treatment performed after welding. According, the Si content should be 3.00 percent by mass or less.

### <Manganese (Mn) content: 0.30 to 20.00 percent by mass>

Manganese (Mn) helps to improve the wettability between the molten pool and the base metal to thereby allow the bead to have a flat shape and helps to increase the hardenability of the wire to increase the hardness of the weldmetal. To exhibit these actions effectively, the Mn content should be at least 0.30 percent by mass or more. In contrast, manganese combines with oxygen contained in the wire to form rigid slag with poor removability. The flux, if having an Mn content exceeding 20. 00 percent by mass, may cause excessive generation of slag with significantly poor removability, thus increasing the load on the aftertreatment performed after welding. Accordingly, the Mn content should be 20.00 percent by mass or less.

### <Phosphorus (P) content: 0.050 percent by mass or less, sulfur (S) content: 0.050 percent by mass or less>

Though phosphorus (P) is known to advantageously improve the corrosion resistance and sulfur (S) is known to lower the surface tension of the molten metal (molten iron) to ensure satisfactory wettability between the molten pool and the base metal, both phosphorus and sulfur elements are widely known to render the weld metal to often suffer from solidification cracking during welding and to have insufficient toughness. Delayed cracking caused by the strength of metal and hydrogen can be prevented by performing preheating and/or post-heating, but the solidification cracking is difficult to be prevented by such thermal control and should be prevented by setting an appropriate composition. In general, a hardfacing weld metal often suffers from solidification cracking due typically to its high carbon content, through it does not need such high toughness. The allowable upper limits of the phosphorus and sulfur contents in the wire to give a hardfacing weld metal are not so strict, because the hardfacing welding process employs a lower welding speed than those in regular joint welding processes. However, there arises no problem when the phosphorus and sulfur contents are controlled to be 0.050 percent by mass or less, respectively, and the upper limits of the phosphorus and sulfur contents are herein set to be 0.050 percent by mass, respectively.

### <Total content of TiO₂+ZrO₂+Al₂O₃: 0.10 to 1.20 percent by mass>

TiO₂, ZrO₂, and Al₂O₃, if in small amounts, are important substances necessary for allowing the bead to have a flat shape. TiO₂, ZrO₂, and Al₂O₃ play a role as a source for generating a stable arc near to the anode and as an oxygen source for generating a minimum thermal pinch force. When the flux in the wire contains at least one of TiO₂, ZrO₂, and Al₂O₃, the arc is always generated at the flux exposed from the tip of the wire, thus preventing the unstable phenomenon where the arc generation spot creeps up along the wire. In addition, TiO₂, ZrO₂, and Al₂O₃ cause an endothermic reaction upon their thermal dissociation, and this shrinks the cross-sectional area of the arc near to the anode, thus also preventing the unstable phenomenon where the arc generation spot creeps up along the wire. In this connection, creeping up of the arc generation spot along the wire causes an excessively elongated tip-hanging molten droplet, whereby the arc and the bead shape become unstable.

The total content of TiO₂, ZrO₂ and Al₂O₃ should be at least 0.10 percent by mass to prevent such phenomenon. In contrast, if the total content exceeds 1.20 percent by mass, oxygen generated as a result of dissociation is excessively fed to combine with carbon to cause frequent minute CO explosions, and this increases the fume generation and blows off the hanging molten droplet to cause coarse spatters. In addition, the transfer of the molten droplet is excessively stabilized, and the molten droplet is transferred only directly below the wire, whereby the weld bead penetrates excessively deep and has a convex shape. Furthermore, slag, an oxidation product, is generated excessively. However, when the total content of these components falls within the range of 0.10 to 1.20 percent by mass, the tip-hanging molten droplet swings within an adequate area, to give a flat bead which penetrates shallow. In addition, CO explosions affect very little, because dissociated oxygen is generated in a limited amount. The total content is more preferably controlled to be 0.80 percent by mass or less, for further reducing the slag generation.

Generally, TiO₂ is used as natural rutile, synthetic rutile, or high-purity titanium oxide; ZrO₂ is used as zircon sand; and Al₂O₃ is used typically as alumina. These are designations of powdery ores or compounds.

### <Total content of Si and Mn: 1.20 percent by mass or more>

The Si content and the Mn content are specif ied respectively, but there is a lower limit of the total content of silicon and manganese. Specifically, if the total content of silicon and manganese is less than 1.20 percent by mass, the wire may not provide sufficient wettability between the molten pool and the base metal. Accordingly, the total content of silicon and manganese should be 1.20 percent by mass or more.

The flux may further contain at least one selected from the group consisting of Cr, Mo, Ni, B, V, and W respectively in predetermined contents.

### <At least one selected from chromium (Cr) in a content of 30.0 percent by mass or less, molybdenum (Mo) in a content of 2.0 percent by mass or less, nickel (Ni) in a content of 3.0 percent by mass or less, boron (B) in a content of 1.0 percent by mass or less, vanadium (V) in a content of 3.0 percent by mass or less, and tungsten (W) in a content of 3.0 percent by mass or less>

Where necessary, the hardfacing weld metal preferably contains elements showing high hardenability, in addition to C, Si, and Mn, so as to further increase the hardness of the weld metal. Some of hardfacing weld metals may permit weld cracking, in contrast to regular joint welding for joining steel plates with each other. However, when the flux contains at least one of high-hardenability elements Cr, Mo, Ni, B, V, and W, the resulting hardfacing weld metal may inevitably suffer from significant cracking and lose its practicability, if the Cr content exceeds 30.0 percent by mass, the Mo content exceeds 2. 0 percent by mass, the Ni content exceeds 3.0 percent by mass, the B content exceeds 1. 0 percent by mass, the V content exceeds 3.0 percent by mass, or the W content exceeds 3.0 percent by mass. Accordingly, the Cr, Mo, Ni, B, V, and W contents should be controlled to be equal to or less than the above-specified contents.

### <Other components>

The flux may further contain small amounts of elements such as K, Ca, Na, Mg, F, Li, and Al as agents for finely modifying the arc performance and as flux components; and small amounts of elements such as Cu, Co, N, and Nb as additional hardening agents for the weld metal.

The remainder other than the above-mentioned elements mainly includes iron (Fe) and further includes trace amounts of inevitable impurities. These components do not affect the objects of the present invention.

### <Total flux mass ratio: 5 to 30 percent by mass>

The ratio of the total mass of the flux to the mass of the wire (hereinafter briefly referred to as "total fluxmass ratio") is the mass of the flux per unit length of the wire. A smaller total flux mass ratio indicates a smaller area of the core flux occupying in the cross sectional area. Stabilization of the arc adequately in the pure argon shielding gas needs a dual structure composed of the flux and the sheath steel. If the total flux mass ratio is less than 5 percent by mass, however, the effect of the dual structure substantially disappears, and the wire undergoes meltinguniformly over the whole cross section as with the solidwire, and the wire gives an elongated tip-hanging molten droplet to cause both the transfer of the molten droplet and the bead shape to be unstable. In addition, the total flux mass ratio should be 5 percent by mass or more to allow the wire to undergo the multi-stage melting. In contrast, if the total flux mass ratio exceeds 30 percent by mass, the sheath steel should be excessively thin to impede the production of the wire. In addition, the sheath steel, through which the current passes, is significantly overheated, and only the sheath steel above the arc is melted; and this impedes proper multi-stage melting to cause both the transfer of the molten droplet and the bead shape to be unstable. Accordingly, the ratio of the total mass of the flux to the mass of the wire should be 30 percent by mass or less.

### <Hardness of weld metal: Vickers hardness (Hv) of 200 or more>

The nominal hardnesses of weld metals are classified in "Arc welding flux cored wires for hardfacing" in JIS Z3326 typically as class 200 (Hv: 250 or less), class 250 (Hv: 200 to 300), and class 300 (Hv: 250 to 350). Among them, the present invention is preferably effectively adopted to weld metals of the class 250 (Hv: 200 to 300) or higher, where the weld metals are practical in view of hardness, and customary weld metals suffer from significant problems such as fumes and spatters. Accordingly, the welding wire according to the present invention preferably gives a weld metal having a Vickers hardness (Hv) of 200 or more. Such a weld metal having a Vickers hardness (Hv) of 200 or more can be obtained by specifying the compositions of the welding wire and specifying the composition of the shielding gas used both within the ranges as specified in the present invention.

Of the components described above, itispreferredtospecify the content of graphite contained as the carbon, and to specify the ratio of the total mass of TiO₂, ZrO₂, and Al₂O₃ to the carbon content [(TiO₂+ZrO₂+Al₂O₃)/C].

### <Content of graphite as carbon: 0.10 percent by mass or more>

Carbon (C) plays a role of increasing the melting point of the flux to prevent the tip-hanging molten droplet from elongating. Among carbon sources, graphite is.particularly advantageous from the viewpoints of satisfactory melting point and high wire productivity. The carbon content is specified herein to be 0.12 percent by mass or more. The wire, when having a graphite content in the flux of 0.10 percent by mass or more, can allow the arc to be further effectively stabilized. Accordingly, the flux preferably has a content of graphite, as the carbon, of 0.10 percent by mass or more.

### <(TiO₂+ZrO₂+Al₂O₃)/C: 5.0 or less>

Though the total content of TiO₂ ZrO₂, and Al₂O₃, and the carbon content are independently specified, it is more preferred to further control the ratio between these parameters. With an increasing ratio of the total content of TiO₂, ZrO₂, and Al₂O₃ to the carbon content [(TiO₂+ZrO₂+Al₂O₃)/C], CO explosions are more actively generated in the tip-hangingmolten droplet portion of the wire, thus causing the generation of spatters and fumes in larger amounts. This problem becomes substantially trivial when the ratio of the total content of TiO₂, ZrO₂ , and Al₂O₃ to the carbon content is controlled to be 5.0 or less. Accordingly, the ratio [(TiO₂+ZrO₂+Al₂O₃)/C] is preferably controlled to be 5.0 or less.

### «Hardfacing MIG-Arc Welding Process»

The arc welding process according to the present invention uses the welding wire having the above-mentioned component composition. This arc welding process adopts a pure argon gas as the shielding gas. The process preferably gives a weld metal after welding having a Vickers hardness of 200 or more.

The current waveform upon welding is preferably a pulse waveform, and the pulse waveform more preferably has a peak current of 400 to 450 A.

The details of these will be described below. The Vickers hardness of the weld metal is as with the welding wire, and the explanation thereof is omitted herein.

### <Pure Argon Gas>

As has been described above, the use of a nonoxidative inert gas as the shielding gas provides breakthrough effects such as the reduction of fumes, spatters, and slag, the flatness of the bead shape, and the reduction of penetration depth. In addition to argon (Ar), exemplary inert gases further include He, Ne, Kr, Xe, and Rn, but all of these are very expensive and thus lack practicability. In addition, from the technical viewpoints, they give an arc with poor stability, because their cooling activities relating to their atomic weights are improper with respect to the arc. The pure argon gas is therefore adopted as the shielding gas in the arc welding process according to the present invention. As used herein the term "pure argon" permits to have regular industrial purities. Specifically, both Class 1 and Class 2 "argon" as specified in JIS K1105 can be adopted herein.

### <Pulse Current Waveform>

The arc welding process according to the present invention adopts a pure argon shielding gas. The use of a so-called pulse waveform as the welding current/voltage effectively enables low spatter generation rate and low fume generation rate at currents ranging from low currents to high currents. The pulse welding process using a pulse waveform is a welding process in which a high current region of 400 A or more (called "peak region") and a low current region of 150 A or less (called "base region") are alternately repeatedly applied at a high frequency of 100 Hz or more. It is also important to allow the molten droplets to drop regularly in the MIG-arc welding using the wire having a diameter of 1.2 mm, most popular one, in combination with a pure argon shielding gas, because the regularity of the pinch off of the molten droplets is inferior to that in MAG welding (metal active gas welding) using an oxidative gas. The pulse welding process is advantageous because it enables regular pinch off of the molten droplets by imparting a pinch force always by the action of the high current region regardless of the average current.

### <Peak Current of Pulse Waveform: 400 to 450 A>

As has been described above, in the case of a wire having a most common diameter of 1.2 mm, the pulse waveform generally has a peak current of 400 A or more. If the pulse waveform has a peak current of more than 450 A, the arc may have excessive directivity, and the weld bead may penetrate excessively deep. Such excessively deep penetration of the weld bead is not desirable in hardfacing welding, because the properties of the weld metal may be more affected through dilution with the base metal. In contrast, the pulse waveform, if having a peak current of less than 400 A, may lose its arc stabilization effect and may not so effectively reduce spatters and fumes. Accordingly, the pulse waveform preferably has a peak current in the range of from 400 to 450 A. With an increasing wire diameter, the welding needs a higher melting energy. Accordingly, it is recommended that the pulse waveform has a peak current of 440 to 490 A at a wire diameter of 1.4 mm and a peak current of 480 to 530 A at a wire diameter of 1.6 mm.

### <Other Components>

Regarding the power source (welding power source), a current direction called reversed polarity to allow the wire to be positive (+) and the base metal to be negative (-) is generally adopted. However, an alternating waveform in which reversed polarity and straight polarity are alternately repeated in an adequate proportion can be adopted without problems.

As has been described above, the hardfacing MIG-arc welding wire and hardfacing MIG-arc welding process according to the present invention have excellent characteristics such as (1) lower fume generation rate, (2) lower spatter generation rate, (3) lower slag generation rate, (4) satisfactorily flat bead, (5) and less influence by the base metal components. In addition, they can give a weld metal showing less internal defects and having a sufficient hardness as a hardfacing weld metal.

The welding wire and arc welding process according to the present invention are epoch-makingwire andweldingprocess which can exhibit these multiple advantageous effects simultaneously.

### Examples

Next, the welding wire and arc welding process according to the present invention will be illustrated in further detail while comparing working examples satisfying the conditions as specified in the present invention with comparative examples not satisfying the conditions as specified in the present invention.

In the following examples and comparative examples, one-pass welding was performed on the surface of a SM490A steel plate, a kind of carbon steel plate, under predetermined welding conditions using each of experimentally produced wires having a diameter of 1.2mm, and the properties or parameters as mentioned later were determined. Fig. 2 is a schematic view showing how to determine these properties or parameters. As is illustrated in Fig. 2, the arc welding gave a hardfacing weld metal 60 on the surface of a base metal 50, i.e., on the SM4 90A steel plate.

The compositions of the wire sheaths are shown in Table 1; and the types of the sheaths, the component compositions of the fluxes, the compositions of the shielding gases, and welding conditions such as set pulse conditions of the power source (i.e., the conditions of the pulse peak current (A)) are shown in Tables 2 and 3. Regarding the wire structure, Sample No. 44 adopted a solid wire, and the composition of the solid wire is shown as the "component composition". The other samples adopted flux-cored wires. In Tables 2 and 3, the symbol "-" represents, for example, a component in question is not contained; and data which do not fall within ranges specified in the present invention are underlined. The data below the symbol "*1" are total contents of TiO₂, ZrO₂, and Al₂O₃ (TiO₂+ZrO₂+Al₂O₃); and data below the symbol "*2" are ratios of the total mass of TiO₂ ZrO₂ and Al₂O₃ to the carbon mass [(TiO₂+ZrO₂+Al₂O₃)/C], while rounding off the numbers to the second decimal place. The pure argon gas used herein was an argon gas in accordance with JIS K1105 and is indicated as "Ar 100%" in the tables.

**TABLE 1**

| | Component composition (percent by mass) (remainder: Fe and inevitable impurities) | | | | | | |
|---|---|---|---|---|---|---|---|
| | C | Si | Mn | P | S | Cr | Ti |
| F1 | 0.01 | 0.01 | 0.22 | 0.010 | 0.005 | <0.01 | <0.01 |
| F2 | 0.01 | 0.05 | 0.15 | 0.005 | 0.003 | 17.2 | 0.30 |

**TABLE 2**

| Category | No. | Sheath | Component composition | | | | | | | | | | | | | | Shielding gas composition (by volume) | Pulse peak current (A) |
|---|---|---|---|---|---|---|---|---|---|---|---|---|---|---|---|---|---|---|
| | | | (mass%) (remainder: Fe and inevitable impurities) | | | | | | | | | | | | | | | |
| | | | Flux mass ratio | C | Graphite | Si | Mn | Si+Mn | P | S | TiO₂ | ZrO₂ | Al₂O₃ | *1 | *2 | Others | | |
| | 1 | F1 | 15 | 0.30 | 0.29 | 0.75 | 1.70 | 2. 45 | 0.010 | 0.010 | 0. 30 | - | - | 0.30 | 1.00 | - | Ar 100% | 440 |
| | 2 | F1 | 15 | 0.30 | 0.29 | 0.75 | 1.70 | 2. 45 | 0.010 | 0.010 | 0.30 | - | - | 0. 30 | 1.00 | - (with copper plating) | Ar 100% | 440 |
| | 3 | F1 | 20 | 0. 55 | 0. 53 | 0.78 | 1.65 | 2. 43 | 0.009 | 0.003 | 0.15 | - | - | 0.15 | 0. 27 | - | Ar 100% | 450 |
| | 4 | F1 | 5 | 0.12 | 0.10 | 0. 55 | 1.25 | 1. 80 | 0.018 | 0.015 | 0.11 | - | - | 0.11 | 0.92 | - | Ar 100% | 460 |
| | 5 | F1 | 22 | 0.13 | 0.12 | 0.55 | 1.40 | 1.95 | 0.013 | 0.023 | - | - | 0.25 | 0. 25 | 1.92 | Cr:1.20 Mo:0.42 | Ar 100% | 400 |
| | 6 | F1 | 25 | 0.16 | 0. 15 | 0.78 | 2.00 | 2.78 | 0. 012 | 0.007 | 0.20 | 0.15 | - | 0.35 | 2.19 | Cr:1. 60, Mo:0.61 | Ar 100% | 480 |
| | 7 | F1 | 19 | 0.17 | 0.16 | 0.70 ' | 1.80 | 2. 50 ^{.} | 0.013 | 0.009 | 0.50 | - | - | 0.50 | 2. 94 | Cr:3.90, Mo:0.55 V:0.29 | Ar 100% | 450 |
| | 8 | F1 | 23 | 0. 60 | 0.58 | 0.51 | 0.95 | 1.46 | 0.011 | 0.006 | - | 0.22 | - | 0.22 | 0.37 | Cr:4.50. Mo:0.55 | Ar 100% | 430 |
| | 9 | F1 | 18 | 0.70 | 0. 68 | 0.80 | 1.23 | 2. 03 | 0.014 | 0.010 | 0.60 | - | 0.55 | 1.15 | 1.64 | Cr:5.65. Mo: 1.20 W: 1.35 V:0.62 | Ar 100% | 450 |
| | 10 | F1 | 17 | 1.35 | 1.34 | 0.94 | 2.32 | 3.26 | 0.015 | 0.009 | 1.20 | - | - | 1.20 | 0.89 | Cr:4.01, B:0.60, W:2.00 | . Ar 100% | 460 |
| | 11 | F1 | 28 | 3.20 | 3.18 | 1. 50 | 0.50 | 2.00 | 0.011 | 0.006 | 0.17 | - | 0.18 | 0.35 | 0.11 | Cr:24.0 B:0.36 | Ar 100% | 500 |
| | 12 | F2 | 30 | 4. 90 | 4. 85 | 2. 70 | 0.35 | 3.05 | 0.008 | 0.008 | 0.80 | 0.80 - - | - | 0.80 | 0.16 | Cr:23. 0. Mo:1.20 B:0.34, V : 3. 0 | Ar 100% | 470 |
| | 13 | F2 | 26 | 0.65 | 0.60 | 0.65 | 19. 20 | 19. 85 | 0.025 | 0.016 | 0.20 | - | - | 0.20 | 0.31 | Cr:17.2, 2, Mo: 1.60, V:0.60 | Ar 100% | 430 |
| | 14 | F1 | 24 | 1.00 | 0.99 | 0.80 | 16.00 | 16.80 | 0.00 | 0.008 | 0. 40 | - | - | 0. 40 | 0. 40 | - | Ar 100% | 420 |
| Examples | 15 | F1 | 22 | 0.12 | 0.11 | 0.75 | 1. 40 | 2.15 | 0.011 | 0.007 | 0.15 | - | - | 0.75 | 6. 25 | Cr:15.0. Ni:2.30 | Ar 100% | nonpulse |
| | 16 | F1 | 19 | 0.15 | 0.14 | 0. 57 | 1.15 | 1.72 | 0.009 | 0.006 | - | - | 0.37 | 0.37 | 2. 47 | Cr : 12.5, Ni :1.25, W:0.60, V:0.25 | Ar 100% | 390 |
| | 17 | F1 | 10 | 0. 40 | 0. 38 | 0.60 | 0. 62 | 1.22 | 0.011 | 0.010 | 0. 25 | - | - | 0.25 | 0.63 | Cr:29.5, W:2.8 | Ar 100% | 425 |
| | 18 | F1 | 22 | 0.16 | 0.08 | 0.88 | 1.55 | 2. 43 | 0.010 | 0. 0.41. | 0.19 | - | - | 0. 19 | 1.19 | Mo:0.25 | Ar 100% | 445 |
| | 19 | F1 | 14 | 0. 88 | 0.80 | 1.05 | 9.04 | 10.09 | 0.045 | 0.008 | 0.78 | - | - | 0.78 | 0.89 | - | Ar 100% | nonpulse |
| | 20 | F1 | 18 | 0.15 | 0.14 | 0.90 | 3.50 | 4. 40 | 0.010 | 0.006 | - | 0.27 | 0.50 | 0.77 | 5.13 | Ni :2. 75 | Ar 100% | 420 |
| | 21 | F1 | 22 | 2. 00 | 0.19 | 2.01 | 6.55 | 8.56 | 0. 020 | 0.049 | - | - | 0.10 | 0.10 | 0.05 | - | Ar 100% | 450 |
| | 22 | F2 | 15 | 0.20 | 0.12 | 1. 25 | 1.75 | 3. 00 | 0.005 | 0.001 | - | - | 1.00 | 1.00 | 5.00 | Cr:18.0, Ni:1.8, B:0.05. Mo:0.35 | Ar 100% | 450 |

| | | | | | | | | | | | | | | | | | | |
|---|---|---|---|---|---|---|---|---|---|---|---|---|---|---|---|---|---|---|
| *1: TiO₂-ZrO₂+Al₂O₃ *2: (TiO₂+ZrO₂+Al₂O₃)/C | | | | | | | | | | | | | | | | | | |

**TABLE 3**

| Category | No. | Sheath | Component composition | | | | | | | | | | | | | | Shielding gas composition (by volume) | Pulse peak current (A) |
|---|---|---|---|---|---|---|---|---|---|---|---|---|---|---|---|---|---|---|
| | | | (mass%) (remainder: Fe and inevilable impurities) | | | | | | | | | | | | | | | |
| | | | Flux mass ratio | C | graphite | Si | Mn | Si+Mn | P | S | TiO₂ | ZrO₂ | Al₂O₃ | *1 | *2 | Others | | |
| | 23 | F1 | 4 | 0.20 | 0.19 | 0.75 | 1.69 | 2.44 | 0.008 | 0.009 | 0.26 | - | - | 0.26 | 1.30 | - | Ar 100% | 430 |
| | 24 | F1 | 32 | 0.65 | 0.64 | 1.00 | 1.05 | 2.05 | 0.010 | 0.008 | 0.60 | - | - | 0.60 | 0.92 | - | Ar 100% | 440 |
| | 25 | F1 | 15 | 0.11 | 0.10 | 0.63 | 2.02 | 2.65 | 0.009 | 0.009 | 0.23 | 0.12 | - | 0.35 | 3.18 | Cr:2.05 | An 100% | 425 |
| | 26 | F1 | 25 | 0.07 | 0.05 | 0.91 | 0.85 | 1.76 | 0.015 | 0.013 | 0.16 | - | 0.15 | 0.31 | 4.43 | - | Ar 100% | 460 |
| | 27 | F2 | 16 | 5.12 | 5.02 | 0.52 | 1.25 | 1.77 | 0.012 | 0.007 | 0.07 | - | 0.13 | 0.20 | 0.04 | Cr:18.5 | Ar 100% | 450 |
| | 28 | F1 | 22 | 0.35 | 0.34 | 0.45 | 1.12 | 1.57 | 0.018 | 0.007 | 0.26 | - | - | 0.26 | 0.74 | Cr:2.25, Mo:1.05 | Ar 100% | 430 |
| | 29 | F1 | 26 | 0.44 | 0.40 | 3.10 | 1.90 | 5.00 | 0.020 | 0.012 | 0.25 | - | - | 0.25 | 0.57 | - | Ar 100% | 430 |
| | 30 | F1 | 13 | 0.14 | 0.13 | 1.09 | 0.25 | 1.34 | 0.011 | 0.012 | - | 0.11 | 0.06 | 0.17 | 1.21 | - | Ar 100% | 425 |
| | 31 | F1 | 15 | 0.19 | 0.18 | 2.24 | 21.50 | 23.74 | 0.009 | 0.007 | 0.06 | 0.07 | - | 0.13 | 0.68 | - | Ar 100% | 400 |
| | 32 | F1 | 22 | 3.20 | 3.10 | 0.60 | 0.50 | 1.10 | 0.016 | 0.008 | 1.01 | - | - | 1.01 | 0.32 | Cr:4.50. V:0.35. B:0.25 | Ar 100% | 400 |
| | 33 | F1 | 25 | 0.25 | 0.24 | 0.75 | 1.90 | 2.65 | 0.055 | 0.011 | 0.20 | - | - | 0.20 | 0.80 | - | Ar 100% | 425 |
| Comparative Examples | 34 | F1 | 14 | 0.20 | 0.19 | 1.50 | 1.00 | 2.50 | 0.012 | 0.054 | 0.03 | - | 0.69 | 0.72 | 3.60 | - | Ar 100% | 450 |
| | 35 | F1 | 15 | 0.30 | 0.29 | 0.75 | 1.70 | 2.45 | 0.010 | 0.010 | - | - | - | - | - | - | Ar 100% | 440 |
| | 36 | F1 | 20 | 0.55 | 0.53 | 0.78 | 1.65 | 2.43 | 0.009 | 0.003 | 0.08 | - | - | 0.08 | 0.15 | - | Ar 100% | 450 |
| | 37 | F1 | 24 | 0.30 | 0.19 | 0.66 | 1.45 | 2.11 | 0.012 | 0.007 | 1.30 | - | - | 1.30 | 4.33 | - | Ar 100% | 430 |
| | 38 | F1 | 16 | 0.06 | 0.02 | 0.85 | 2.10 | 2.95 | 0.011 | 0.010 | 6.80 | - | 0.40 | 7.20 | 120.00 | - | Ar 100% | 450 |
| | 39 | F1 | 15 | 0.30 | 0.29 | 0.75 | 1.70 | 2.45 | 0.010 | 0.010 | 0.44 | - | | 0.44 | 1.47 | - | Ar 99%+O₂ 1% | 440 |
| | 40 | F1 | 20 | 0.25 | 0.24 | 0.91 | 2.02 | 2.93 | 0.007 | 0.007 | 0.30 | 0.30 | 0.30 | 0.90 | 3.60 | Cr:10.5, Mo:0.75. B:0.50 | Ar 95%+0₁5% | nonpulse |
| | 41 | F1 | 18 | 0.14 | 0.13 | 0.62 | 1.00 | 1.62 | 0.020 | 0.020 | 0.61 | - | - | 061 | 4.36 | - | Ar 80%+CO₂20% | 440 |
| | 42 | F2 | 26 | 0.65 | 0.60 | 0.65 | 19.20 | 19.85 | 0.025 | 0.016 | 0.18 | - | - | 0.18 | 0.28 | Cr:172, Mo:1.60, V:0.60 | Ar 97%+CO₂ 3% | 430 |
| | 43 | F1 | 18 | 0.70 | 0.68 | 0.80 | 1.23 | 2.03 | 0.014 | 0.010 | 0.50 | - | 0.60 | 1.10 | 1.57 | Cr:5.65, Mo:1.20, W:1.35 | CO₂ 100% | nonpulse |
| | 44 | Solid | - | 0.24 | - | 0.75 | 1.80 | 2.55 | 0.010 | 0.010 | - | - | - | - | - | Ti:0.20 | Ar 100% | 440 |
| | 45 | F1 | 15 | 0.30 | 0.29 | 0.75 | 1.70 | 2.45 | 0.010 | 0.010 | 0.15 | - | 0.15 | 0.30 | 1.00 | - | Ar 80%+He 20% | 430 |

| | | | | | | | | | | | | | | | | | | |
|---|---|---|---|---|---|---|---|---|---|---|---|---|---|---|---|---|---|---|
| *1: TiO₂+ZrO₂+Al₂O₃ *2: (TiO₂+ZrO₂-Al₂O₃)/C | | | | | | | | | | | | | | | | | | |

### <Fume Generation Rate>

The fume generation rate was determined through measurement using a fume collection chamber prescribed in JIS Z3930. A fume generation rate of 0.50 mg/min or less is considered to be pleasant as a working environment for workers. Accordingly, a sample having a fume generation rate of 0.50 mg/min or less was judged as accepted (A), and a sample having a fume generation rate of more than 0.50 mg/min was judged as rejected (R).

### <Spatter Generation Rate>

The spatter generation rate was determined by collecting spatters scattering into the surroundings and spatters deposited on a shielding nozzle, and measuring the total mass of these spatters. A spatter generation rate of 1.0 g/min or less is considered to be pleasant as a working environment for workers. Accordingly, a sample having a spatter generation rate of 1.0 g/min or less was judged as accepted (A), whereas a sample having a spatter generation rate of more than 1.0 g/min was judged as rejected (R).

### <Slag Generation Rate>

The slag generation rate was determined by collecting slag deposited on the bead surface and slag removed from the bead surface, and measuring the total mass of them. A slag generation rate of 1.0 g/min or less is considered to be pleasant as a working environment for workers, while considering effort to be expended on a removing operation of the slag. Accordingly, a sample having a slag generation rate of 1.0 g/min or less was judged as accepted (A), whereas a sample having a slag generation rate of more than 1.0 g/min was judged as rejected (R).

### <Bead Shape>

The bead shape was evaluated based on a shape parameter (H/W). The shape parameter (H/W) was determined by cutting a sample bead in a direction perpendicular.to the welding direction, measuring a bead height (H) and a bead width (W) in a cross section of the cut bead, and calculating the ratio of the bead height (H) to the bead width (W) as the shape parameter (H/W) . A shape parameter (H/W) of 0.50 or less is considered to be pleasant as a working environment for workers, while considering effort to be expended on grinding the weld bead after welding to be flat. Accordingly, a sample having a shape parameter (H/W) of 0.50 or less was judged as accepted (A), whereas a sample having a shape parameter (H/W) of more than 0.50 was judged as rejected (R).

### <Penetration Depth>

The penetration depth was evaluated based on a measured penetration depth D. The penetration depth D was determined by cutting a sample bead in a direction perpendicular to the welding direction, etching the cross section of the cut bead with an acid, and measuring a depth from the surface of the base metal 50 to the deepest portion where the bead penetrated the base metal 50 as the penetration depth D. A minimum penetration depth at which insufficient penetration might not occur is considered to be 1.0 mm; and a maximum penetration depth at which the effects of the base metal components affecting on the hardness of the weld metal are trivial is considered to be 3.0 mm. Accordingly, a sample having a penetration depth D within the range of from 1. 0 mm to 3.0 mm was judged as accepted (A), whereas a sample having a penetration depth D of less than 1.0 mm or more than 3.0 mm was judged as rejected (R).

### <Internal Defects>

The samples were evaluatedon internal defects by detecting bead cracking and lack of fusion through an ultrasonic flaw detection. A sample showing neither cracking nor lack of fusion was judged as accepted (A), whereas a sample showing cracking and/or lack of fusion was judged as rejected (R).

### <Weld Metal Hardness>

The weld metal hardness was evaluated based on an average Vickers hardness. The average Vickers hardness was determined by cutting a sample bead in a direction perpendicular to the welding direction, randomly selecting three points in the vicinity of the center of the cross section of the cut bead, measuring Vickers hardnesses at the three points, and averaging the measured Vickers harnesses to give the average Vickers hardness. A sample having an average Vickers hardness of 200 or more is herein considered to be usable as a hardfacing weld metal. Accordingly, a sample having an average Vickers hardness of 200 or more was judged as accepted (A), whereas a sample having an average Vickers hardness of less than 200 was judged as rejected (R).

The results are shown in Tables 4 and 5.

**TABLE 4**

| Category | No. | Fume generation rate | | Spatter generation rate | | Slag generation rate | | Bead shape | | Penetration depth | | Internal defects | | Weld metal hardness | |
|---|---|---|---|---|---|---|---|---|---|---|---|---|---|---|---|
| | | (g/min) | Judgment | (g/min) | Judgment | (g/min) | Judgment | (H/W) | Judgment | (mem) | Judgment | Presence/absence | Judgment | (Hv) | Judgment |
| Examples | 1 | 0.21 | A | 0.30 | A | 0.22 | A | 0.34 | A | 2.1 | A | abs. | A | 380 | A |
| | 2 | 0.21 | A | 0.30 | A | 0.22 | A | 0.34 | A | 2.1 | A | abs. | A | 380 | A |
| | 3 | 0.25 | A | 0.49 | A | 0.18 | A | 0.32 | A | 2.3 | A | abs. | A | 455 | A |
| | 4 | 0.13 | A | 0.77 | A | 0.09 | A | 0.35 | A | 2.7 | A | abs. | A | 215 | A |
| | 5 | 0.16 | A | 0.64 | A | 0.13 | A | 0.30 | A | 2.5 | A | abs. | A | 286 | A |
| | 6 | 0.18 | A | 0.52 | A | 0.34 | A | 0.44 | A | 2.8 | A | abs. | A | 395 | A |
| | 7 | 0.22 | A | 0.70 | A | 0.30 | A | 0.45 | A | 2.6 | A | abs. | A | 440 | A |
| | 8 | 0.19 | A | 0.68 | A | 0.26 | A | 0.40 | A | 2.6 | A | abs. | A | 585 | A |
| | 9 | 0.37 | A | 0.44 | A | 0.75 | A | 0.26 | A | 1.7 | A | abs. | A | 690 | A |
| | 10 | 0.35 | A | 0.50 | A | 0.81 | A | 0.41 | A | 2.0 | A | abs. | A | 825 | A |
| | 11 | 0.42 | A | 0.78 | A | 0.50 | A | 0.47 | A | 2.6 | A | abs. | A | 770 | A |
| | 12 | 0.39 | A | 0.89 | A | 0.87 | A | 0.25 | A | 1.9 | A | abs. | A | 850 | A |
| | 13 | 0.30 | A | 0.46 | A | 0.29 | A | 0.38 | A | 2.2 | A | abs. | A | 290 | A |
| | 14 | 0.35 | A | 0.57 | A | 0.20 | A | 0.41 | A | 2.7 | A | abs. | A | 249 | A |
| | 15 | 0.40 | A | 0.95 | A | 0.66 | A | 0.47 | A | 1.4 | A | abs. | A | 364 | A |
| | 16 | 0.23 | A | 0.80 | A | 0.41 | A | 0.35 | A | 1.9 | A | abs. | A | 395 | A |
| | 17 | 0.33 | A | 0.41 | A | 0.21 | A | 0.31 | A | 2.3 | A | abs. | A | 810 | A |
| | 18 | 0.19 | A | 0.96 | A | 0.12 | A | 0.49 | A | 1.1 | A | abs. | A | 244 | A |
| | 19 | 0.41 | A | 0.87 | A | 0.50 | A | 0.42 | A | 1.3 | A | abs. | A | 260 | A |
| | 20 | 0.25 | A | 0.90 | A | 0.94 | A | 0.29 | A | 1.5 | A | abs. | A | 471 | A |
| | 21 | 0.42 | A | 0.40 | A | 0.29 | A | 0.40 | A | 1.3 | A | abs. | A | 420 | A |
| | 22 | 0.24 | A | 0.48 | A | 0.15 | A | 0.36 | A | 1.9 | A | abs. | A | 578 | A |

**TABLE 5**

| Category | No. | Fume generation rate | | Spatter generation rate | | Slag generation rate | | Bead shape | | Penetration depth | | Infernal defects | | Weld metal hardness | |
|---|---|---|---|---|---|---|---|---|---|---|---|---|---|---|---|
| | | (glmin) | Judgment | (g/min) | Judgment | (g/min) | Judgment | (H/W) | Judgment | (mm) | Judgment | Presence/absence | Judgment | (Hv) | Judgment |
| Comparative Examples | 23 | 0.13 | A | 1.55 | R | 0.31 | A | 0.75 | R | 0.7 | R | abs. | A | 247 | A |
| | 24 | 0.43 | A | 1.20 | R | 0.35 | A | 0.73 | R | 0.8 | R | abs. | A | 464 | A |
| | 25 | 0.34 | A | 1.44 | R | 0.42 | A | 0.69 | R | 0.8 | R | abs. | A | 225 | A |
| | 26 | 0.22 | A | 1.77 | R | 0.22 | A | 0.81 | R | 0.7 | R | abs. | A | 190 | R |
| | 27 | 0.65 | R | 1.34 | R | 0.34 | A | 0.34 | A | 2.2 | A | pres. | R | 762 | A |
| | 28 | 0.30 | A | 0.46 | A | 0.35 | A | 0.59 | R | 2.4 | A | abs. | A | 425 | A |
| | 29 | 0.44 | A | 0.88 | A | 1.10 | R | 0.47 | A | 1.9 | A | abs. | A | 387 | A |
| | 30 | 0.33 | A | 0.75 | A | 0.17 | A | 0.77 | R | 1.5 | A | abs. | A | 181 | R |
| | 31 | 0.49 | A | 0.89 | A | 1.22 | R | 0.32 | A | 1.8 | A | abs. | A | 308 | A |
| | 32 | 0.28 | A | 0.56 | A | 0.20 | A | 0.68 | R | 2.2 | A | abs. | A | 687 | A |
| | 33 | 0.27 | A | 0.45 | A | 0.35 | A | 0.39 | A | 2.5 | A | pres. | R | 274 | A |
| | 34 | 0.20 | A | 0.32 | A | 0.49 | A | 0.20 | A | 1.2 | A | pres. | R | 249 | A |
| | 35 | 0.42 | A | 1.61 | R | 0.17 | A | 0.65 | R | 0.8 | R | abs. | A | 377 | A |
| | 36 | 0.44 | A | 1.39 | R | 0.17 | A | 0.52 | R | 0.7 | R | abs. | A | 450 | A |
| | 37 | 0.58 | R | 1.11 | R | 1.40 | R | 0.66 | R | 3.4 | R | abs. | A | 371 | A |
| | 38 | 0.95 | R | 2.10 | R | 10.11 | R | 0.75 | R | 0.7 | R | abs. | A | 186 | R |
| | 39 | 0.75 | R | 1.70 | R | 1.77 | R | 0.69 | R | 4.1 | R | abs. | A | 360 | A |
| | 40 | 2.26 | R | 4.40 | R | 3.90 | R | 0.92 | R | 4.6 | R | abs. | A | 656 | A |
| | 41 | 4.55 | R | 6.23 | R | 5.25 | R | 1.13 | R | 5.3 | R | abs. | A | 195 | R |
| | 42 | 0.69 | R | 1.20 | R | 1.33 | R | 0.60 | R | 3.8 | R | abs. | A | 266 | A |
| | 43 | 9.34 | R | 12.44 | R | 9.56 | R | 0.75 | R | 7.7 | R | abs. | A | 602 | A |
| | 44 | 0.42 | A | 14.60 | R | 0.24 | A | 2.25 | R | 0.4 | R | abs. | A | 382 | A |
| | 45 | 0.38 | A | 1.56 | R | 0.33 | A | 0.55 | R | 3.8 | R | abs. | A | 250 | A |

Samples Nos. 1 to 22 are examples satisfying the conditions specified in the present invention, i.e., the wire structure, the component composition in the flux, and the shielding gas composition, and excelled in all the evaluated properties. Specifically, they provided excellent working properties and stableweldmetalperformance. Typically, theygaveweldmetals having such hardness as to have satisfactory functions as hardfacing weld metals while showing further lower generation rates of fumes, spatters, and slag, in contrast to customary welding wires and arc welding processes. In addition, they gave weld metals (weld beads) having flat shapes and such adequate penetration shapes as to be resistant to effects by the composition of the base metal and showing no internal defects in the beads.

In contrast, Samples Nos. 23 to 45 are comparative examples and showed the following results.

Sample No. 23 suffered from spatters catter, unsatisfactory bead shape, and insufficient penetration of the bead, because the sample had an excessively low flux mass ratio, whereby failed to have a dual structure action necessary for the arc stabilization in the pure argon gas atmosphere, and failed to stabilize the arc.

Sample No. 24 suffered froms patter scatter,unsatisfactory bead shape, and insufficient penetration, because the sample had an excessively high flux mass ratio in contrast to Sample No. 23, and whose sheath was readily melted to cause creeping up of the arc generation spot to thereby cause the arc to be unstable.

SampleNo.25sufferedfrom spatterscatter,unsatisfactory bead shape, and insufficient penetration, because the sample had an insufficient content of carbon necessary to stabilize the arc in the pure argon gas atmosphere, and thereby failed to stabilize the arc.

Sample No. 26 also suffered from spatter scatter, unsatisfactory bead shape, and insufficient penetration because the sample had an insufficient carbon content to thereby fail to stabilize the arc. In addition, the sample had an insufficient hardness necessary as a hardfacing weld metal.

Sample No. 27 had an excessively high carbon content, whereby the flux core in the wire was resistant to melting and remained as intact in the weld metal to cause unmolten defects as internal defects. In addition, the sample suffered from large amounts of fumes and spatters due to CO generation.

Sample No. 28 had an insufficient Si content and thereby gave a weld bead having insufficient wettability and having a convex, inferior shape.

Sample No. 29 had an excessively high Si content and thereby suffered from a large amount of slag of oxidation products.

Sample No. 30 had an insufficient Mn content and thereby gave a weld bead having insufficient wettability and having a convex, inferior shape. In addition, the sample showed insufficient hardenability and thereby gave a weld metal having an insufficient hardness as a hardfacing weld metal.

Sample No. 31 had an excessively high Mn content and thereby suffered from the generation of slag of oxidation products in large amounts.

Although having a Si content and an Mn content respectively within the specific ranges, Sample No. 32 had a total content of Si and Mn lower than the specified level, thereby showed insufficient wettability and gave a weld bead having a convex, inferior shape.

SampleNo. 33 had an excessively high phosphorus (P) content and Sample No. 34 had an excessively high sulfur (S) content. These samples therefore gave weld metals suffering from solidification cracking defects as internal defects.

Sample No. 35 did not contain TiO₂ ZrO₂, and Al₂O₃ in the flux, thereby failed to stabilize the arc in the pure argon gas atmosphere, and suffered from spatter scatter, unsatisfactory bead shape, and insufficient penetration.

Sample No. 36 contained TiO₂ in the flux but had an insufficient total content of TiO₂, ZrO₂, and Al₂O₃, thereby failed to stabilize the arc in the pure argon gas atmosphere, and suffered from spatter scatter, unsatisfactory bead shape, and insufficient penetration.

Sample No. 37 had an excessively high total content of TiO₂, ZrO₂, and Al₂O₃. This caused dissociated oxygen to be fed in an excessive amount and thereby caused the generation of fumes, spatters, and slag in large amounts. The sample also gave a weld bead which had an inferior shape and penetrated excessively deep with an excessively large penetration depth.

Sample No. 38 is a most popular flux-cored wire "YFW-C50DR (JIS Z3313:1999)" . This wire had a low carbon content and a very high total content of TiO₂, ZrO₂ and Al₂O₃ and thereby suffered from the generation of fumes, spatters, and slag in large amounts . The wire gave a weld bead which had an inferior shape, penetrated insufficiently, and had an insufficient hardness necessary as a hardfacing weld metal.

Samples No. 39 and No. 40 had wire components within the ranges specified in the present invention, but they were subjected to welding using a shielding gas containing argon (Ar) and a trace amount of O₂. The oxygen (O₂) caused vigorous oxidation reactions typically with carbon and thereby caused the generation of fumes, spatters, and slag in large amounts. In addition, the arc was excessively stabilized, and the resulting weld beads had convex shapes and penetrated excessively deep.

Though whose wire components satisfied the conditions specified in the present invention, Sample No. 41 was subjected to welding with a shielding gas containing argon and 20 percent by volume of CO₂. The shielding gas showed high oxidative property due to oxygen formed as a result of dissociation of CO₂, thereby caused vigorous oxidation reactions, and caused the generation of fumes, spatters, and slag in large amounts. In addition, the arc was excessively stabilized, and the resultingweldbeadhada convex shape and penetrated excessively deep. The sample wire also suffered from significant oxidative consumption of alloy components, i.e., slag loss, and thereby gave a weld metal showing insufficient hardenability and having an insufficient hardness necessary as a hardfacing weld metal.

Though whose wire components satisfied the conditions specified in the present invention, Sample No. 42 was subjected to welding with a shielding gas containing argon and a trace amount of CO₂. The sample thereby suffered from the generation of fumes, spatters, and slag in large amounts, due to vigorous reoxidation reactions with oxygen formed as a result of dissociation of CO₂. In addition, the arc was excessively stabilized, and the resulting weld bead had a convex shape and penetrated excessively deep.

Though whose wire components satisfied the conditions specified in the present invention, Sample No. 43 was subjected to welding with CO₂ as a shielding gas. Accordingly, fumes, spatters, and slag were generated in large amounts, because the shielding gas was a strongly oxidative gas. In addition, the resulting weld bead had a convex shape and penetrated excessively deep.

Sample No. 44 is a kind of solidwire for hardfacing welding. This wire is generally subjected to welding with CO₂ gas as a shielding gas. However, the pure argon gas was adopted as the shielding gas and the welding was performed in a pure argon gas atmosphere in this experiment, thereby this sample failed to stabilize the arc at all and was substantially difficult to undergo welding. In addition, the sample suffered from the generation of spatters in large amounts due to the unstable arc and gave a weld bead having a convex shape and penetrating insufficiently.

Though whose wire components satisfied the conditions specified in the present invention, Sample No. 45 was subjected to welding with a shielding gas containing argon and 20 percent by volume of helium (He). Helium is an inert gas as with argon, has no oxidative property, and can thereby suppress the generation of fumes and slag. However, helium has a further smaller atomic weight than that of argon and has a higher function of cooling the arc due to heat transfer. Thus, helium caused excessive focusing of the arc, and this caused the generation of coarse spatters in large amounts and gave a weld bead having a convex shape and penetrating excessively deep.

While the present invention has been shown and described with reference to embodiments and working examples, it should be understood that the present invention be not limited by any of the details of description, but rather be construed broadly within its spirit and scope as set out in the appended claims. It is believed obvious that various modifications and variations are possible in the present invention in light of the above description.

## Claims

1. A wire adopted to hardfacing MIG-arc welding using a pure argon gas as a shielding gas,
wherein the wire is a flux-cored wire including a drawn steel hoop or steel pipe as a sheath; and a flux filled in the sheath,
wherein the flux comprises, based on the total mass of the wire:
carbon (C) in a content of 0.12 to 5.00 percent by mass;
silicon (Si) in a content of 0.50 to 3.00 percent by mass;
manganese (Mn) in a content of 0.30 to 20.00 percent by mass;
phosphorus (P) in a content of 0.050 percent by mass or less;
sulfur (S) in a content of 0.050 percent by mass or less; and
at least one selected from the group consisting of TiO₂ ZrO₂, and Al₂O₃ (TiO₂+ZrO₂+Al₂O₃) in a total content of 0.10 to 1.20 percent by mass,
wherein the flux has a total content of silicon and manganese (Si+Mn) of 1.20 percent by mass or more based on the total mass of the wire, and
wherein the wire has a ratio of the total mass of the flux to the mass of the wire of 5 to 30 percent by mass.

2. The hardfacing MIG-arc welding wire according to Claim 1, wherein the flux contains, as the carbon, graphite in a content of 0.10 percent by mass or more based on the total mass of the wire.

3. The hardfacing MIG-arc welding wire according to Claim 1 or2, wherein the flux has a ratio of the total mass of TiO₂ ZrO₂ and Al₂O₃ to the mass of carbon [(TiO₂+ZrO₂+Al₂O₃) /C] of 5.0 or less.

4. The hardfacing MIG-arc welding wire according to any one of Claims 1 to 3, wherein the flux further comprises, based on the total mass of the wire, one or more selected from the group consisting of chromium (Cr) in a content of 30.0 percent by mass or less, molybdenum (Mo) in a content of 2.0 percent by mass or less, nickel (Ni) in a content of 3.0 percent by mass or less, boron (B) in a content of 1.0 percent by mass or less, vanadium (V) in a content of 3.0 percent by mass or less, and tungsten (W) in a content of 3.0 percent by mass or less.

5. A process for hardfacing MIG-arc welding using the hardfacing MIG-arc welding wire according to any one of Claims 1 to 4,
wherein the process comprises using a pure argon gas as a shielding gas.

6. The process according to Claim 5, wherein a pulse waveform is applied as a current waveform.

7. The process according to Claim 6 , wherein the pulse waveform has a peak current of 400 to 450 amperes (A).

## Patentansprüche

1. Draht zum Anwenden beim MIG-Lichtbogenauftragsschweißen unter Verwendung eines reinen Argongases als ein Schutzgas,
wobei der Draht ein Fülldraht ist, einschließend ein Band aus gezogenem Stahl oder ein Stahlrohr als eine Umhüllung; und ein in die Umhüllung eingefülltes Fließmittel,
wobei das Fließmittel, basierend auf der Gesamtmasse des Drahts, umfasst:
Kohlenstoff (C) in einem Gehalt von 0,12 bis 5,00 Massen-%;
Silicium (Si) in einem Gehalt von 0,50 bis 3,00 Massen-%;
Mangan (Mn) in einem Gehalt von 0,30 bis 20,00 Massen-%;
Phosphor (P) in einem Gehalt von 0,050 Massen-% oder weniger;
Schwefel (S) in einem Gehalt von 0,050 Massen-% oder weniger; und
mindestens eines, ausgewählt aus der Gruppe, bestehend aus TiO₂, ZrO₂ und
Al₂O₃ (TiO₂+ZrO₂+Al₂O₃) in einem Gesamtgehalt von 0,10 bis 1,20 Massen-%,
wobei das Fließmittel einen Gesamtgehalt an Silicium und Mangan (Si+Mn) von 1,20 Massen-% oder mehr, basierend auf der Gesamtmasse des Drahts, aufweist und
wobei der Draht einen Anteil der Gesamtmasse des Fließmittels zu der Masse des Drahts von 5 bis 30 Massen-% aufweist.

2. MIG-Lichtbogenauftragsschweißdraht nach Anspruch 1, wobei das Fließmittel als den Kohlenstoff Graphit in einem Gehalt von 0,10 Massen-% oder mehr, basierend auf der Gesamtmasse des Drahts, enthält.

3. MIG-Lichtbogenauftragsschweißdraht nach Anspruch 1 oder 2, wobei das Fließmittel ein Verhältnis der Gesamtmasse von TiO₂, ZrO₂ und Al₂O₃ zu der Masse von Kohlenstoff [(TiO₂+ZrO₂+Al₂O₃)/C] von 5,0 oder weniger aufweist.

4. MIG-Lichtbogenauftragsschweißdraht nach einem der Ansprüche 1 bis 3, wobei das Fließmittel weiter, basierend auf der Gesamtmasse des Drahts, eines oder mehrere, ausgewählt aus der Gruppe, bestehend aus Chrom (Cr) in einem Gehalt von 30,0 Massen-% oder weniger, Molybdän (Mo) in einem Gehalt von 2,0 Massen-% oder weniger, Nickel (Ni) in einem Gehalt von 3,0 Massen-% oder weniger, Bor (B) in einem Gehalt von 1,0 Massen-% oder weniger, Vanadium (V) in einem Gehalt von 3,0 Massen-% oder weniger und Wolfram (W) in einem Gehalt von 3,0 Massen-% oder weniger, umfasst.

5. Verfahren zum MIG-Lichtbogenauftragsschweißen, vervuendend den MIG-Lichtbogenauftragsschweißdraht nach einem der Ansprüche 1 bis 4, wobei das Verfahren das Verwenden eines reinen Argongases als ein Schutzgas umfasst.

6. Verfahren nach Anspruch 5, wobei eine Pulswellenform als eine Stromwellen-form angewendet wird.

7. Verfahren nach Anspruch 6, wobei die Pulswellenform einen Spitzenstrom von 400 bis 450 Ampere (A) aufweist.

## Revendications

1. Fil adopté afin d'assurer un durcissement de surface par soudage à l'arc MIG en utilisant de l'argon gazeux pur en tant que gaz de protection,
dans lequel le fil est un fil à flux fourré comportant une frette ou tube en acier étiré en tant que gaine ; et un flux remplissant la gaine,
dans lequel le flux comprend, sur la base de la masse totale du fil :
du carbone (C) avec une teneur de 0,12 à 5,00 pour-cent en masse ;
du silicium (Si) avec une teneur de 0,50 à 3,00 pour-cent en masse ;
du manganèse (Mn) avec une teneur de 0,30 à 20,00 pour-cent en masse ;
du phosphore (P) avec une teneur inférieure ou égale à 0,050 pour-cent en masse ;
du soufre (S) avec une teneur inférieure ou égale à 0,050 pour-cent en masse ; et
au moins un élément sélectionné à partir du groupe constitué par le TiO₂, le Zr0₂, et l'Al₂O₃ (TiO₂ + ZrO₂ + Al₂O₃) avec une teneur totale de 0,10 à 1,20 pour-cent en masse,
dans lequel le flux présente une teneur totale en silicium et manganèse (Si + Mn) supérieure ou égale à 1,20 pour-cent en masse sur la base de la masse totale du fil, et
dans lequel le fil présente un rapport de la masse totale du flux sur la masse du fil de 5 à 30 pour-cent en masse.

2. Fil de soudage à l'arc MIG de durcissement de surface selon la revendication 1, dans lequel le flux contient, en tant que carbone, du graphite avec une teneur supérieure ou égale à 0,10 pour-cent en masse sur la base de la masse totale du fil.

3. Fil de soudage à l'arc MIG de durcissement de surface selon la revendication 1 ou 2, dans lequel le flux présente un rapport de la masse totale de TiO₂, ZrO₂, et Al₂O₃ sur la masse du carbone [(TiO₂ + ZrO₂+Al₂O₃)/Cl inférieur ou égal à 5,0.

4. Fil de soudage à l'arc MIG de durcissement de surface selon l'une quelconque des revendications 1 à 3, dans lequel le flux comprend en outre sur la base de la masse totale du fil, un ou plusieurs éléments sélectionné à partir du groupe constitué par le chrome (Cr) avec une teneur inférieure ou égale à 30,0 pour-cent en masse, le molybdène (Mo) avec une teneur inférieure ou égale à 2,0 pour-cent en masse, le nickel (Ni) avec une teneur inférieure ou égale à 3,0 pour-cent en masse, le bore (B) avec une teneur inférieure ou égale à 1,0 pour-cent en masse, le vanadium (V) avec une teneur inférieure ou égale à 3,0 pour-cent en masse, et le tungstène (W) avec une teneur inférieure ou égale à 3,0 pour-cent en masse.

5. Procédé de durcissement de surface par soudage à l'arc MIG en utilisant le fil de soudage à l'arc MIG de durcissement de surface selon l'une quelconque des revendications 1 à 4,
dans lequel le procédé comprend l'utilisation d'argon gazeux pur en tant que gaz de protection.

6. Procédé selon la revendication 5, dans lequel une forme d'onde impulsionnelle est appliquée en tant que forme d'onde de courant.

7. Procédé selon la revendication 6, dans lequel la forme d'onde impulsionnelle présente un courant de pointe de 400 à 450 ampères (A).
